(19) Europäisches Patentamt
European Patent Office
Office européen des brevets

(11) **EP 3 576 225 A1**

(12) **EUROPEAN PATENT APPLICATION**

(43) Date of publication:
**04.12.2019 Bulletin 2019/49**

(51) Int Cl.:
**H01Q 1/38** (2006.01)   **H01Q 7/00** (2006.01)
**H01Q 9/26** (2006.01)

(21) Application number: **19176712.8**

(22) Date of filing: **27.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2018   JP 2018106256**

(71) Applicant: **Toshiba Tec Kabushiki Kaisha 141-8562 Tokyo (JP)**

(72) Inventor: **Kishimoto, Seiya Tokyo, 141-8562 (JP)**

(74) Representative: **Hoffmann Eitle Patent- und Rechtsanwälte PartmbB Arabellastraße 30 81925 München (DE)**

(54) **ANTENNA DEVICE AND COMMUNICATION APPARATUS**

(57) According to one embodiment, an antenna device includes a first split ring, a second split ring, and a power supply line. The first split ring is made of a conductor and has a first gap. The second split ring is made of a conductor, is formed in an opening of the first split ring, and has a second gap formed at a position facing the conductor of the first split ring. The power supply line is connected to the first split ring.

*FIG. 1*

EP 3 576 225 A1

**Description**

CROSS-REFERENCE TO RELATED APPLICATIONS

This application is based upon and claims the benefit of priority from Japanese Patent Application No. 2018-106256, filed in June 1, 2018, the entire contents of which are incorporated herein by reference.

FIELD

Embodiments described herein relate generally to an antenna device and a communication apparatus.

BACKGROUND

An antenna device included in a communication apparatus may use a split ring. Such an antenna device transmits and receives radio waves of a resonance frequency based on the inductance and capacitance of the split ring.
When the antenna device is miniaturized, the split ring is also miniaturized at the same time, so that the inductance and capacitance are reduced. As a consequence, since the resonance frequency of the radio waves transmitted and received by the antenna device is reduced, it is not possible to appropriately set a frequency band.
Therefore, in the related art, a technology for increasing the inductance and capacitance of the antenna device is required.

SUMMARY OF THE INVENTION

One of the objects of the present invention is to improve prior art techniques and overcome at least some of the prior art problems as for instance above illustrated.
According to a first aspect of the present invention, it is provided an antenna device comprising: a first split ring comprising a conductor and having an opening and a first gap; a second split ring comprising a conductor, formed in the opening of the first split ring, and having a second gap at a position facing the conductor of the first split ring; and a power supply line connected to the first split ring.
Optionally, the device according to the first aspect of the invention further comprises a dielectric plate, wherein the first split ring and the second split ring are positioned on the dielectric plate.
Optionally, in the device according to the first aspect of the invention, the first split ring is positioned on a first surface of the dielectric plate, and the second split ring is positioned on a second surface facing the first surface.
Optionally, in the device according to the first aspect of the invention, the second gap is in a direction opposite to a direction of the first gap.
Optionally, in the device according to the first aspect of the invention, the first split ring has a first capacitance and the second split ring has a second capacitance.
Optionally, in the device according to the first aspect of the invention, the first capacitance is different from the second capacitance.
Optionally, in the device according to the first aspect of the invention, the first split ring has a first inductance and the second split ring has a second inductance.
Optionally, in the device according to the first aspect of the invention, the first inductance is different from the second inductance.
Optionally, in the device according to the first aspect of the invention, the first split ring has a capacitance and the second split ring has a capacitance, and a capacitance between the first split ring and the second split ring are connected in parallel.
Optionally, in the device according to the first aspect of the invention, the first split ring has an inductance and the second split ring has an inductance, and the inductance of the first split ring and the inductance of the second split ring are serially connected to each other.
Optionally, in the device according to the first aspect of the invention, the first split ring has a "C" shape.
In a second aspect of the invention, it is provided a communication apparatus comprising: an antenna device comprising: a first split ring comprising a conductor and having an opening and a first gap; a second split ring comprising a conductor, formed in the opening of the first split ring, and having a second gap at a position facing the conductor of the first split ring; and a power supply line connected to the first split ring; and a processor that transmits and receives data to and from an external apparatus through the antenna device.
Optionally, the communication apparatus according to the second aspect of the invention further comprises a dielectric plate, wherein the first split ring and the second split ring are positioned on the dielectric plate.
Optionally, in the communication apparatus according to the second aspect of the invention, the first split ring is positioned on a first surface of the dielectric plate, and the second split ring is positioned on a second surface facing the first surface.

Optionally, in the communication apparatus according to the second aspect of the invention, the second gap is in a direction opposite to a direction of the first gap.

Optionally, in the communication apparatus according to the second aspect of the invention, the first split ring has a capacitance and the second split ring has a capacitance, and a capacitance between the first split ring and the second split ring are connected in parallel.

Optionally, in the communication apparatus according to the second aspect of the invention, the first split ring has an inductance and the second split ring has an inductance, and the inductance of the first split ring and the inductance of the second split ring are serially connected to each other.

Optionally, in the communication apparatus according to the second aspect of the invention, the communication apparatus is a POS terminal.

Optionally, in the communication apparatus according to the second aspect of the invention, the communication apparatus is a printer.

Optionally, in the communication apparatus according to the second aspect of the invention, the communication apparatus is a scanner.

DESCRIPTION OF THE DRAWINGS

FIG. 1 is a view illustrating a configuration example of a POS system according to a first embodiment;
FIG. 2 is a view illustrating a configuration example of a control board;
FIG. 3 is a view illustrating a configuration example of an antenna device;
FIG. 4 is a circuit diagram illustrating an equivalent circuit of a split ring; and
FIG. 5 is a view illustrating a configuration example of an antenna device according to a second embodiment.

DETAILED DESCRIPTION

An exemplary embodiment provides an antenna device and a communication apparatus capable of appropriately setting a frequency band of radio waves to be transmitted and received.

In general, according to one embodiment, an antenna device includes a first split ring, a second split ring, and a power supply line. The first split ring is made of a conductor and has a first gap. The second split ring is made of a conductor, is formed in an opening of the first split ring, and has a second gap formed at a position facing the conductor of the first split ring. The power supply line is connected to the first split ring.

Hereinafter, embodiments will be described with reference to the drawings.

First Embodiment

Firstly, the first embodiment will be described.

A POS system according to the embodiment settles a commodity and the like. In the POS system, a POS terminal reads a code from the commodity by using a scanner and the like. Furthermore, the POS terminal prints an image related to the settlement by using a printer and the like.

The POS terminal wirelessly transmits and receives data to and from the scanner, the printer, and the like through an antenna device. The POS terminal communicates with the scanner, the printer, and the like by using radio waves of a predetermined frequency band.

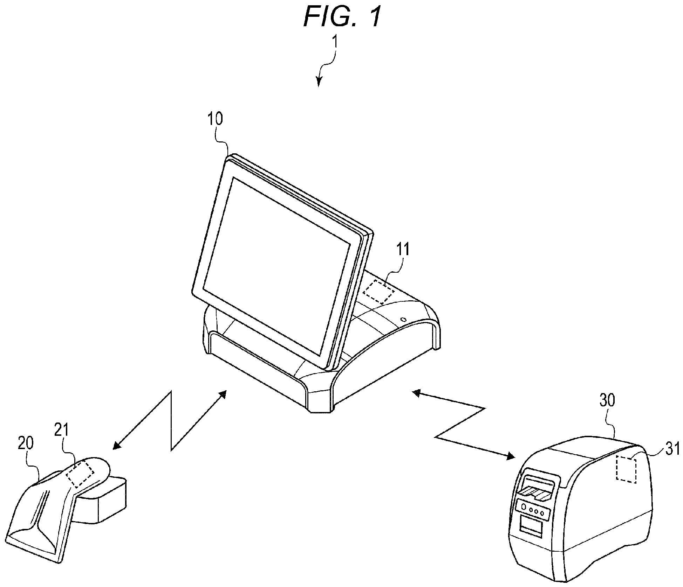

FIG. 1 illustrates a configuration example of a POS system 1 according to the embodiment. As illustrated in FIG. 1, the POS system 1 is composed of a POS terminal 10 (a communication apparatus or an external apparatus). Furthermore, the POS system 1 includes peripheral devices related to settlement processing. Here, the POS system 1 includes a scanner 20 (a communication apparatus or an external apparatus) and a printer 30 (a communication apparatus or an external apparatus) as the peripheral device.

In addition, the POS system 1 may have a configuration as required in addition to the configuration as illustrated in FIG. 1, or may exclude a specific configuration. For example, the POS system 1 may include a keyboard, a stationary barcode scanner, a drawer, an automatic change machine, a credit card terminal, a password input device, a point card terminal, or a customer display as the peripheral device.

The POS terminal 10 wirelessly transmits and receives data to and from the scanner 20 and the printer 30. The POS terminal 10 performs settlement processing by transmitting and receiving data to and from the scanner 20 and the printer 30.

The POS terminal 10 includes an antenna device 11. The antenna device 11 is an interface for transmitting and receiving data to and from the peripheral devices such as the scanner 20 and the printer 30. The antenna device 11 transmits and receives data to and from the scanner 20 and the printer 30 by using radio waves of a predetermined frequency band. For example, the antenna device 11 transmits and receives radio waves of 920 MHz band. For example, the antenna device 11 is used for wireless LAN connection, Bluetooth (registered trademark) connection, and the like.

The scanner 20 reads a code attached to a commodity and the like. The scanner 20 transmits data obtained by decoding the read code to the POS terminal 10.

The scanner 20 includes an antenna device 21. The antenna device 21 is an interface for transmitting and receiving data to and from the POS terminal 10 and the like. Since the configuration of the antenna device 21 is the same as that of the antenna device 11, a description thereof will be omitted.

The printer 30 prints predetermined data on the basis of a signal from the POS terminal 10. For example, the printer 30 prints a receipt, credit details, and the like.

The printer 30 includes an antenna device 31. The antenna device 31 is an interface for transmitting and receiving data to and from the POS terminal 10 and the like. Since the configuration of the antenna device 31 is the same as that of the antenna device 11, a description thereof will be omitted.

Next, a control board of the POS terminal 10 will be described.

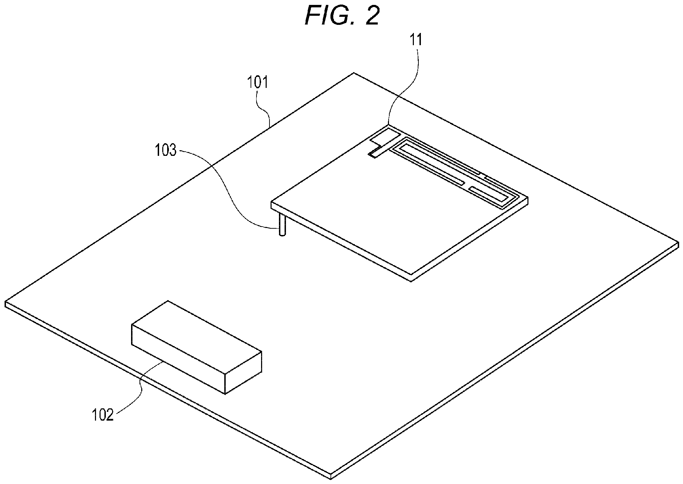

FIG. 2 is a view illustrating a configuration example of a control board 101 of the POS terminal 10. On the control board 101, a processor 102, a signal line 103, and the antenna device 11 are formed.

The control board 101 is a board for controlling the POS terminal 10. The control board 101 is formed inside the POS terminal 10. The control board 101 controls a signal supplied from the antenna device 11 and a signal supplied to the antenna device 11. For example, the control board 101 modulates a predetermined signal and supplies the modulated signal to the antenna device 11. Furthermore, the control board 101 demodulates a signal from the antenna device 11.

The processor 102 controls an entire operation of the control board 101. That is, the processor 102 has a function of controlling the entire operation of the POS terminal 10. The processor 102 may include an internal cache, various interfaces, and the like. The processor 102 may perform various processes by executing programs stored in advance in an internal memory, an external memory, and the like. Some of various functions, which are realized when the processor 102 executes the programs, may be realized by a hardware circuit. In such a case, the processor 102 controls a function that is realized by the hardware circuit.

Furthermore, the processor 102 may be an application specific integrated circuit (ASIC), a field-programmable gate array (FPGA), or the like.

The signal line 103 connects the antenna device 11 and the control board 101 to each other. That is, the signal line 103 connects the antenna device 11 and the processor 102 to each other. Furthermore, the signal line 103 may have a structure of supporting the antenna device 11.

The antenna device 11 is an interface used to transmit and receive the radio waves of the predetermined frequency band. The antenna device 11 has a predetermined resonance frequency. The antenna device 11 transmits and receives radio waves of a frequency band equivalent to that of the resonance frequency. The antenna device 11 supplies the control board 101 with a signal of the received radio waves through the signal line 103. Furthermore, the antenna device 11 converts a signal supplied from the signal line 103 into an electromagnetic wave and outputs the electromagnetic wave to an exterior. That is, the antenna device 11 operates as an electromagnetic wave radiator.

The processor 102 settles a commodity and the like. For example, the processor 102 reads a code indicating a commodity from a commodity to be settled through the scanner 20. When the code is read, the processor 102 acquires the price of the commodity indicated by the code. For example, the processor 102 acquires the price from a memory of the POS terminal 10. Furthermore, the processor 102 may acquire the price from an external apparatus.

When the price is acquired, the processor 102 settles the commodity on the basis of the price. For example, the processor 102 receives the price using a drawer and the like. Furthermore, the processor 102 performs settlement processing on the basis of credit card information acquired from a credit card and the like.

When the commodity is settled, the processor 102 outputs a paper printed with information on the settlement by using the printer 30. For example, the processor 102 outputs a receipt, credit details, and the like by using the printer 30.

In addition, similarly, the scanner 20 and the printer 30 also have the processor. Since the configurations of the processors of the scanner 20 and the printer 30 are the same as that of the processor 102, a description thereof will be omitted.

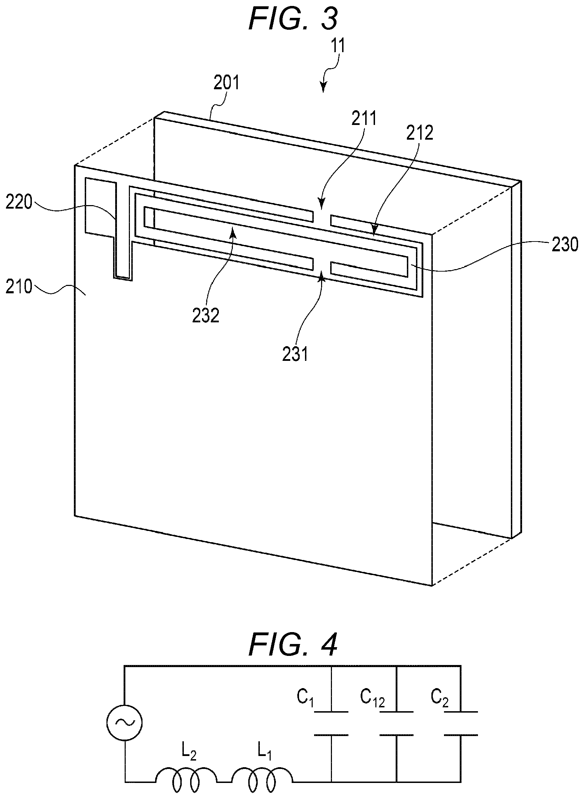

Next, the antenna device 11 will be described. FIG. 3 is a view illustrating a configuration example of the antenna device 11. As illustrated in FIG. 3, the antenna device 11 is composed of a dielectric plate 201.

The dielectric plate 201 is composed of a predetermined dielectric. For example, the dielectric plate 201 is composed of a ceramic, a plastic, and the like. The dielectric plate 201 is formed in a rectangular shape having a predetermined size and a predetermined thickness.

On a predetermined surface of the dielectric plate 201, a first split ring 210 and a second split ring 230 are formed. FIG. 3 illustrates that the dielectric plate 201, the first split ring 210, and the second split ring 230 are separated from one another for the purpose of convenience; however, they actually adhere to one another.

The first split ring 210 is composed of a predetermined conductor. For example, the first split ring 210 is composed of a predetermined metal. The first split ring 210 is a ring formed in a rectangular shape having approximately the same size as that of the dielectric plate 201. The first split ring 210 has an opening 212 therein.

The first split ring 210 has four sides formed with predetermined widths. In the example illustrated in FIG. 3, the width of the lower side of the first split ring 210 is formed to be larger than that of other sides.

The first split ring 210 has a first gap 211. The first gap 211 is formed across a predetermined side. That is, the first split ring 210 is a partially cut ring. In other words, the first split ring 210 is formed in a C shape. In the example illustrated in FIG. 3, the first gap 211 is formed in the middle of an upper side of the first split ring 210.

Furthermore, the first split ring 210 is connected to a power supply line 220. One end of the power supply line 220 is connected to a predetermined side of the first split ring 210. In the example illustrated in FIG. 3, the power supply line 220 is connected to the upper side of the first split ring 210.

The power supply line 220 is composed of a predetermined conductor. The power supply line 220 may be composed of the same material as that of the first split ring 210 or may be composed of other materials.

The other end of the power supply line 220 is connected to the signal line 103. That is, the power supply line 220 electrically connects the signal line 103 and the first split ring 210 to each other. The power supply line 220 supplies an electrical signal from the signal line 103 to the first split ring 210 or supplies an electrical signal from the first split ring 210 to the signal line 103.

In addition, the first split ring 210 may also be connected to other power supply lines (not illustrated).

In the example illustrated in FIG. 3, the power supply line 220 is formed to pass through the opening 212 from the upper side of the first split ring 210.

Furthermore, the second split ring 230 is formed in the opening 212 of the first split ring 210. The second split ring 230 is formed in the opening 212 without contacting the first split ring 210.

The second split ring 230 is composed of a predetermined conductor. For example, the second split ring 230 is composed of a predetermined metal. The second split ring 230 may be composed of the same material as that of the first split ring 210 or may be composed of other materials.

The second split ring 230 is a ring formed in a rectangular shape smaller than the opening 212. The second split ring 230 has an opening 232 therein.

The second split ring 230 has four sides formed with predetermined widths. In the example illustrated in FIG. 3, the widths of the sides of the second split ring 230 are formed to be identical to one another.

The second split ring 230 has a second gap 231. The second gap 231 is formed across a predetermined side. That is, the second split ring 230 is a partially cut ring. In other words, the second split ring 230 is formed in a C shape. In the example illustrated in FIG. 3, the second gap 231 is formed in the middle of a lower side of the second split ring 230.

The second gap 231 is formed at a position different from that of the first gap 211 of the first split ring 210. That is, the second gap 231 is formed at a position not facing the first gap 211. The second gap 231 is formed at a position facing the conductor of the first split ring 210. In the example illustrated in FIG. 3, the second gap 231 is formed to face the side opposite to the side formed with the first gap 211. That is, the second gap 231 is formed in a direction opposite to the direction of the first gap 211.

Next, an equivalent circuit of the first split ring 210 and the second split ring 230 will be described.

FIG. 4 is a circuit diagram illustrating the equivalent circuit of the first split ring 210 and the second split ring 230.

The equivalent circuit receives a current from the power supply line 220. Furthermore, the equivalent circuit supplies the power supply line 220 with induced electromotive force generated by an electromagnetic wave.

In the equivalent circuit, a coil with an inductance of the first split ring 210 and a coil with an inductance of the second split ring 230 are serially connected to each other. Furthermore, in the equivalent circuit, a capacitor with a capacitance generated by the first gap 211, a capacitor with a capacitance generated by the second gap 231, and a capacitor with a capacitance between the first split ring 210 and the second split ring 230 are connected in parallel with one another.

The resonance frequency of the equivalent circuit is expressed by Formula (300) below.

[Formula 1]

$$f = \frac{1}{2\pi\sqrt{(L_1 + L_2)(C_1 + C_{12} + C_2)}} \quad \cdots \quad (300)$$

In Formula (300), $L_1$ denotes the inductance of the first split ring 210. Furthermore, $L_2$ denotes the inductance of the second split ring 230. $C_1$ denotes the capacitance generated by the first gap 211 of the first split ring 210. $C_2$ denotes the capacitance generated by the second gap 231 of the second split ring 230. $C_{12}$ denotes the capacitance

between the first split ring 210 and the second split ring 230.

In addition, the first split ring 210 and the second split ring 230 may not have a rectangular shape. The first split ring 210 and the second split ring 230 may have a circular shape or a polygonal shape. The first split ring 210 and the second split ring 230 are not limited to a specific shape as long as the rings have an annular shape.

Furthermore, the antenna device 11 may not have the dielectric plate 201.

The antenna device configured as above includes the second split ring in the opening of the first split ring connected to the power supply line. As a consequence, in the equivalent circuit of the antenna device, the inductance of the first split ring and the inductance of the second split ring are serially connected to each other. Consequently, the equivalent circuit of the antenna device can have an inductance larger than that of the first split ring.

Furthermore, in the equivalent circuit of the antenna device, the capacitance of the first split ring, the capacitance of the second split ring, and the capacitance between the first split ring and the second split ring are connected in parallel with one another. Consequently, the equivalent circuit of the antenna device can have a capacitance larger than that of the first split ring.

According to Formula (300), when the inductance and capacitance are increased, the resonance frequency of the equivalent circuit is decreased. As a consequence, the antenna device can set a low resonance frequency. For example, even when the inductance and capacitance of the first split ring are decreased due to miniaturization, the antenna device can maintain the resonance frequency while maintaining the inductance and capacitance. As a consequence, the antenna device can transmit and receive electromagnetic waves of an appropriate frequency band.

Second Embodiment

Next, the second embodiment will be described.

An antenna device according to the second embodiment is different from that of the first embodiment in that a second split ring is provided on the rear surface of the dielectric plate 201. Consequently, the other elements are denoted by the same reference numerals and a detailed description thereof will be omitted.

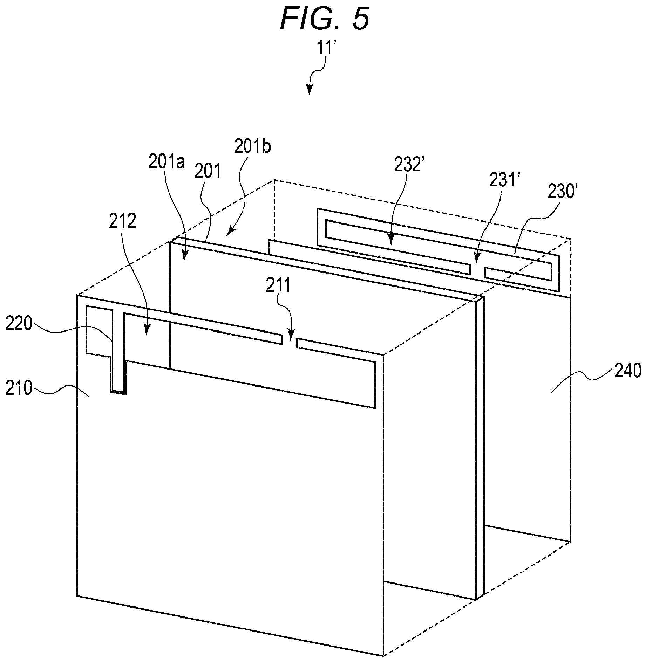

FIG. 5 is a view illustrating a configuration example of an antenna device 11' according to the second embodiment. As illustrated in FIG. 5, the antenna device 11' is composed of the dielectric plate 201. The dielectric plate 201 includes a first surface 201a and a second surface 201b. For example, the dielectric plate 201 has a thickness of 2 mm or less.

The first surface 201a is a predetermined surface of the dielectric plate 201. In the example illustrated in FIG. 5, the first surface 201a indicates a front side surface.

The second surface 201b is a surface facing the first surface 201a. That is, the second surface 201b is a rear surface of the first surface 201a. In the example illustrated in FIG. 5, the second surface 201b indicates a back side surface.

The first split ring 210 is formed on the first surface 201a of the dielectric plate 201. Furthermore, a second split ring 230' and a conductor plate 240 are formed on the second surface 201b of the dielectric plate 201. FIG. 5 illustrates that the dielectric plate 201, the first split ring 210, the second split ring 230', and the conductor plate 240 are separated from one another for the purpose of convenience; however, they actually adhere to one another.

Since the first split ring 210 is the same as that of the first embodiment, a description thereof will be omitted.

As described above, the second split ring 230' is formed on the second surface 201b. The second split ring 230' is formed in the opening 212 of the first split ring 210. That is, the second split ring 230' is formed in an area (an opposite area) of the second surface 201b opposite to an area of the opening 212 on the first surface 201a.

The second split ring 230' is formed in a rectangular shape having the same size as that of the opposite area. That is, the second split ring 230' is a ring having the same size as that of the opening 212.

The second split ring 230' has an opening 232' therein.

The second split ring 230' has four sides formed with predetermined widths. In the example illustrated in FIG. 5, the widths of the sides of the second split ring 230' are formed to be identical to one another.

The second split ring 230' has a second gap 231'. The second gap 231' is formed across a predetermined side. That is, the second split ring 230' is a partially cut ring. In other words, the second split ring 230' is formed in a C shape. In the example illustrated in FIG. 5, the second gap 231' is formed in the middle of a lower side of the second split ring 230'.

The second gap 231' is formed at a position different from that of the first gap 211 of the first split ring 210. That is, the second gap 231' is formed at a position not facing the first gap 211. The second gap 231' is formed at a position facing the conductor of the first split ring 210. In the example illustrated in FIG. 5, the second gap 231' is formed to face the side opposite to the side formed with the first gap 211. That is, the second gap 231' is formed in a direction opposite to the direction of the first gap 211.

Furthermore, the conductor plate 240 is formed on the second surface 201b without contacting the second split ring 230'. The conductor plate 240 is formed on a lower side while being spaced apart from the second split ring 230' at a predetermined interval.

The conductor plate 240 is composed of a predetermined conductor. For example, the conductor plate 240 is composed of a predetermined metal. The conductor plate 240 may be composed of the same material as that of the first split ring 210 or the second split ring 230', or may be composed of other materials.

The conductor plate 240 is formed in a rectangular shape. The conductor plate 240 is formed on the second surface 201b to have a size covering a lower part below the second split ring 230'. The shape and size of the conductor plate 240 are not limited to a specific configuration.

In addition, the antenna device 11' may not include the conductor plate 240.

The second split ring 230' may also be formed in an area other than the area opposite to the opening 212. Furthermore, the second split ring 230' may also be formed at a position partially overlapping the opposite area.

The antenna device configured as above includes the second split ring, which has the same size as that of the opening of the first split ring, on the rear surface of the surface of the dielectric plate on which the first split ring is formed. As a consequence, the first split ring and the second split ring are formed closer to each other than the first embodiment. That is, when the thickness of the dielectric plate is thinner than the gap between the first split ring and the second split ring in the first embodiment, the first split ring and the second split ring are formed closer to each other than the first embodiment.

Consequently, the capacitance between the first split ring and the second split ring increases as compared with the first embodiment. Thus, the antenna device can have a capacitance larger than that in the first embodiment.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims. The accompanying claims and their equivalents are intended to cover such forms or modifications as would fall within the scope of the invention.

**Claims**

1. An antenna device comprising:

   a first split ring comprising a conductor and having an opening and a first gap;
   a second split ring comprising a conductor, formed in the opening of the first split ring, and having a second gap at a position facing the conductor of the first split ring; and
   a power supply line connected to the first split ring.

2. The device according to claim 1, further comprising:

   a dielectric plate, wherein
   the first split ring and the second split ring are positioned on the dielectric plate.

3. The device according to claim 1 or 2, wherein
   the first split ring is positioned on a first surface of the dielectric plate, and
   the second split ring is positioned on a second surface facing the first surface.

4. The device according to any of claims 1 to 3, wherein
   the second gap is in a direction opposite to a direction of the first gap.

5. The device according to any of claims 1 to 4, wherein the first split ring has a first capacitance and the second split ring has a second capacitance.

6. The device according to claim 5, wherein the first capacitance is different from the second capacitance.

7. The device according to any of claims 1 to 6, wherein the first split ring has a first inductance and the second split ring has a second inductance.

8. The device according to claim 7, wherein the first inductance is different from the second inductance.

9. The device according to any of claims 1 to 8, wherein the first split ring has a capacitance and the second split ring has a capacitance, and a capacitance between the first split ring and the second split ring are connected in parallel.

10. The device according to any of claims 1 to 9, wherein the first split ring has an inductance and the second split ring has an inductance, and the inductance of the first split ring and the inductance of the second split ring are serially connected to each other.

11. The device according to any of claims 1 to 10, wherein the first split ring has a "C" shape.

12. A communication apparatus comprising:

an antenna device according to any of claims 1 to 11, and
a processor that transmits and receives data to and from an external apparatus through the antenna device.

13. The communication apparatus according to claim 12, wherein the communication apparatus is a POS terminal.

14. The communication apparatus according to claim 12, wherein the communication apparatus is a printer.

15. The communication apparatus according to claim 12, wherein the communication apparatus is a scanner.

# FIG. 1

# FIG. 2

## FIG. 3

## FIG. 4

# FIG. 5

Europäisches
Patentamt

European
Patent Office

Office européen
des brevets

# EUROPEAN SEARCH REPORT

Application Number

EP 19 17 6712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/123261 A1 (SANO MAKOTO [JP] ET AL) 3 May 2018 (2018-05-03) * figures 1-6, 22-24 * * claim 1 * * paragraph [0055] - paragraph [0058] * ----- | 1-11 | INV. H01Q1/38 H01Q7/00 H01Q9/26 |
| X | WO 2008/083719 A1 (AIDA CT S L [ES]; BONACHE ALBACETE JORDI [ES] ET AL.) 17 July 2008 (2008-07-17) | 1,2,4-12 | |
| Y | * figures 1, 9, 14, 15 * * page 7, line 7 - line 15 * ----- | 13-15 | |
| X | KR 2016 0118754 A (UNIV ULSAN FOUND FOR IND COOP [KR]) 12 October 2016 (2016-10-12) * figures 1, 4 * ----- | 1 | |
| X | EP 2 750 249 A1 (NEC CORP [JP]) 2 July 2014 (2014-07-02) * figures 17-19 * * paragraph [0003] * * paragraph [0026] * ----- | 1,12 | |
| Y,P | US 2019/065794 A1 (SHIMAZAKI TAKESHI [JP]) 28 February 2019 (2019-02-28) * figures 1-4 * ----- | 13-15 | TECHNICAL FIELDS SEARCHED (IPC) H01Q |

The present search report has been drawn up for all claims

| Place of search | Date of completion of the search | Examiner |
|---|---|---|
| The Hague | 26 September 2019 | Topak, Eray |

EPO FORM 1503 03.82 (P04C01)

## ANNEX TO THE EUROPEAN SEARCH REPORT
## ON EUROPEAN PATENT APPLICATION NO.

EP 19 17 6712

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2019

| Patent document cited in search report | | Publication date | Patent family member(s) | | Publication date |
|---|---|---|---|---|---|
| US 2018123261 | A1 | 03-05-2018 | EP | 3319175 A1 | 09-05-2018 |
| | | | JP | 2018074506 A | 10-05-2018 |
| | | | US | 2018123261 A1 | 03-05-2018 |
| WO 2008083719 | A1 | 17-07-2008 | AT | 508493 T | 15-05-2011 |
| | | | EP | 2118965 A1 | 18-11-2009 |
| | | | ES | 2366137 T3 | 17-10-2011 |
| | | | WO | 2008083719 A1 | 17-07-2008 |
| KR 20160118754 | A | 12-10-2016 | NONE | | |
| EP 2750249 | A1 | 02-07-2014 | CN | 103748741 A | 23-04-2014 |
| | | | CN | 105896093 A | 24-08-2016 |
| | | | EP | 2750249 A1 | 02-07-2014 |
| | | | JP | 6020451 B2 | 02-11-2016 |
| | | | JP | WO2013027824 A1 | 19-03-2015 |
| | | | US | 2014203993 A1 | 24-07-2014 |
| | | | US | 2017040689 A1 | 09-02-2017 |
| | | | WO | 2013027824 A1 | 28-02-2013 |
| US 2019065794 | A1 | 28-02-2019 | CN | 107134082 A | 05-09-2017 |
| | | | EP | 3211559 A1 | 30-08-2017 |
| | | | JP | 2017156858 A | 07-09-2017 |
| | | | US | 2017249487 A1 | 31-08-2017 |
| | | | US | 2019065794 A1 | 28-02-2019 |

EPO FORM P0459

For more details about this annex : see Official Journal of the European Patent Office, No. 12/82

## REFERENCES CITED IN THE DESCRIPTION

**Patent documents cited in the description**

- JP 2018106256 A